# NEUE EUROPÄISCHE PATENTSCHRIFT

(11) **EP 2 343 519 B2**
(45) Veröffentlichungstag und Bekanntmachung des Hinweises auf die Entscheidung über den Einspruch: **12.08.2020**
(45) Hinweis auf die Patenterteilung: 25.07.2012
(21) Anmeldenummer: 10015400.4
(22) Anmeldetag: 07.12.2010
(51) Int. Cl.: G01G 11/00

(54) **Wägevorrichtung**
Weighing apparatus
Dispositif de pesage

(30) Priorität: 23.12.2009 DE 102009060291
(43) Veröffentlichungstag der Anmeldung: 13.07.2011
(73) Patentinhaber: Bizerba SE & Co. KG, 72336 Balingen (DE)
(72) Erfinder: Berger, Hermann, 31079 Adenstedt (DE); Oppermann, Christian, 31135 Hildesheim (DE); Horn, Sebastian, 31162 Bad Salzdetfurth (DE)
(74) Vertreter: Manitz Finsterwald Patent- und Rechtsanwaltspartnerschaft mbB

(56) Entgegenhaltungen:
- WO-A1-02/054025
- WO-A1-03/042642
- DE-A1- 1 556 704
- DE-T2- 60 205 980
- JP-A- H08 310 634
- JP-A- 2002 039 845
- US-A- 4 274 499
- US-A- 5 576 520
- Patent abstract of Japan JP 08-310634 A
- Patent abstract of Japan JP JP2002039845 A
- computer translation of JP 08-310634

## Beschreibung

Die vorliegende Erfindung betrifft eine Wägevorrichtung mit Gurtförderung, insbesondere eine Kontrollwaage, umfassend eine Wägeplattform und eine an die Wägeplattform anschließende weitere Plattform, insbesondere Zuführ- oder Abführplattform, wobei die Plattformen jeweils eine sich in Förderrichtung erstreckende Länge aufweisen.

Kontrollwaagen mit Transportband werden üblicherweise innerhalb von Produktionsprozessen zur Produktinspektion oder Gewichtskontrolle eingesetzt, beispielsweise zur Überprüfung von Füll- oder Verpackungsvorgängen. Die dabei gewonnenen Daten können dann eine Grundlage für statistische Auswertungen zur Qualitätskontrolle bilden. Diese Daten können im Rahmen einer "inline"-Prozesskontrolle jedoch auch sofort ausgewertet werden, um weitere Produktionsschritte zu steuern, wie z.B. Aussonderung von Fehlgewichten, Tendenzprognose zur kontinuierlichen Anpassung einer Füll- oder Dosieranlage, Sortierung oder Klassifizierung.

Es sind Kontrollwaagen bekannt, bei denen die zu wiegenden Waren im Durchlauf gewogen werden, d.h. die Messungen werden vorgenommen, während sich die Waren aufgrund einer kontinuierlichen Bewegung des Gurtförderbands ohne Stopp über die Wägeplattform hinwegbewegen. Üblicherweise werden mit der Kontrollwaage unterschiedlichste Artikel gewogen, die sich insbesondere in ihrer Länge unterscheiden können. Ist die Kontrollwaage beispielsweise in eine Produktionslinie eingebunden, können zunächst Artikel einer ersten Art und Länge und nach einer Artikelumstellung Artikel einer zweiten Art und Länge gewogen werden.

Die Messgenauigkeit der Kontrollwaage hängt dabei insbesondere von der Zeit ab, die sich die jeweilige Ware vollständig auf der Wägeplattform befindet. Für eine ausreichend genaue Messung muss die Länge der Wägeplattform daher zumindest der Summe der Länge der jeweiligen Ware und einer zusätzlichen Länge entsprechen, wobei sich die zusätzliche Länge aus dem Produkt der für eine genaue Messung benötigten Zeit und der Bandgeschwindigkeit ergibt.

Um auch für Waren mit großen Längen eine genaue Messung zu ermöglichen, müssen die Wägeplattformen entsprechend lang konstruiert. Für Waren mit kleineren Längen besitzen die so konstruierten Wägeplattformen dann aber eine Länge, die für eine genaue Messung dieser Waren überhaupt nicht erforderlich wäre. Vielmehr könnten die Waren mit den kleineren Längen auch auf kürzeren Wägeplattformen genau gewogen werden, d.h. die Waren mit den kleineren Längen könnten der Wägeplattform in kürzeren Abständen zugeliefert werden. Damit könnte bei Waren mit kleineren Längen ein höherer Durchsatz der Kontrollwaage erreicht werden.

Um dies zu ermöglichen, wird in der EP 1 350 079 B1 vorgeschlagen, eine Zuführplattform und eine winklig daran anschließende Wägeplattform jeweils als Riemenförderer mit mehreren parallel zu einander verlaufenden, voneinander beabstandeten Riemen zu konstruieren, so dass die Plattformen ineinander greifen können. Durch Änderung der Neigung einer der beiden Plattformen kann die wirksame Länge der Wägeplattform verändert werden. Allerdings sind Riemenförderer in der Lebensmittelverarbeitung problematisch, da sie schmutzanfällig und schlecht zu reinigen sind. Darüber hinaus ist die in der EP 1 350 079 B 1 gezeigte Konstruktion bei Gurtförderern nicht realisierbar.

Weiteren Wägevorrichtungen sind aus WO 02/054025 A1, US 5576520 und WO 03/042642 A1 bekannt.

Der Erfindung liegt die Aufgabe zugrunde, eine Wägevorrichtung mit Gurtförderung der eingangs genannten Art anzugeben, die bei Waren mit kleineren Längen einen höheren Durchsatz ermöglicht als bei Waren mit größeren Längen.

Diese Aufgabe wird durch die Merkmale des Anspruchs 1 gelöst, und insbesondere dadurch, dass zumindest die Wägeplattform längenverstellbar, nämlich auseinanderziehbar und zusammenschiebbar, ausgebildet ist.

Die Wägeplattform, insbesondere einer dynamischen Kontrollwaage, ist in Förderrichtung auseinanderziehbar und zusammenschiebbar. Hierdurch kann die Länge der Wägeplattform an die jeweilige Länge der zu wiegenden Waren bzw. die jeweilige Produktlänge angepasst werden. Kürzere bzw. kleinere Waren können von der Wägevorrichtung daher mit einem höheren Durchsatz gewogen werden, da nun der Zulieferabstand zwischen den der Wägeplattform zugeführten Waren verkleinert werden kann. Bei den Plattformen handelt es sich insbesondere um diejenigen Teile der Wägevorrichtung, die zumindest einen Teil einer Auflageebene für das Gurtförderband der Wägevorrichtung aufweisen.

Bevorzugt ist auch die weitere Plattform längenverstellbar, nämlich auseinanderziehbar und/oder zusammenschiebbar, ausgebildet. Insbesondere kann die Längenänderung der Wägeplattform durch eine entgegengesetzte Längenänderung der weiteren Plattform ganz oder teilweise ausgeglichen werden. Grundsätzlich ist es auch möglich, dass mehrere weitere Plattformen vorgesehen sind, die jeweils derart längenverstellbar sind.

Vorzugsweise sind die Längenverstellungen der Plattformen aneinander gekoppelt, d.h. die Verstellungen der Plattformen erfolgen gemeinsam. Die Kopplung kann beispielsweise mechanischer oder elektronischer Art sein. Insbesondere ist die Kopplung derart, dass die eine Plattform in ihrer Länge verkürzt wird, während die andere Plattform gleichzeitig ihre Länge erhöht. Bei der weiteren Plattform kann es sich um die Zuführplattform oder die Abführplattform handeln.

Insbesondere weisen die Plattformen zusammen eine Gesamtlänge auf, die zumindest im Wesentlichen konstant bleibt, wenn die Plattformen längenverstellt werden. Hierdurch kann letztlich eine konstante Vorrichtungslänge bzw. Anlagenlänge gewährleistet werden, d.h. die Positionen von an die Wägevorrichtung ein- und/ oder auslaufseitig anschließenden Förderern, Ver- und/oder Bearbeitungsmaschinen müssen nicht an die veränderten Längenverhältnisse der Plattformen angepasst werden. Vorzugsweise ist die Gesamtlänge kleiner als die Summe der maximalen Längen der beiden Plattformen. Bevorzugt ist die Gesamtlänge für sämtliche Verstellpositionen der Plattformen konstant.

Nach einer Ausführungsform der Erfindung sind die Plattformen jeweils mehrteilig, insbesondere zweiteilig ausgebildet sind, wobei die Teile der jeweiligen Plattform in Förderrichtung relativ zueinander bewegbar, insbesondere verschiebbar sind. Insbesondere weisen die Teile jeweils einen Teil der Auflageebene für das Gurtförderband auf.

Bevorzugt sind die in Förderrichtung insgesamt äußeren Teile in Förderrichtung fest an der Wägevorrichtung gehaltert und/oder die mittleren Teile bewegbar in der Wägevorrichtung gelagert. Bei den insgesamt äußeren Teilen handelt es sich einerseits um das Teil der Wägeplattform, das an dem der weiteren Plattform abgewandten Ende der Wägeplattform vorgesehen sind, und andererseits um das Teil der weiteren Plattform, das an dem der Wägeplattform abgewandten Ende der weiteren Plattform vorgesehen sind. Die mittleren Teile sind zwischen den beiden insgesamt äußeren Teilen angeordnet.

Beispielsweise kann die bewegbare Lagerung der mittleren Teile als Gleitlagerung realisiert sein. Insbesondere können die mittleren Teile entlang von Rundstäben verfahrbar sein. Bevorzugt sind die Gleitlagerungen derart ausgebildet, dass die der Wägeplattform zugeordnete Gleitlagerung mit der der weitere Plattform zugeordneten Gleitlagerung in Förderrichtung überlappt.

Vorzugsweise sind die Teile der jeweiligen Plattform dazu ausgebildet, kämmend ineinander zu greifen. Hierdurch kann erreicht werden, dass die Summe der maximalen Längen der beiden Plattformen größer ist als die Gesamtlänge der Plattformen.

Insbesondere können die beiden Teile der jeweiligen Plattform in sämtlichen Verstellpositionen der Plattformen kämmend ineinander greifen, d.h. die Teile der jeweiligen Plattform können derart ausgebildet sein, dass auch in der Stellung mit maximaler Länge die Teile ineinander greifen. Dies führt dazu, dass in sämtlichen Verstellpositionen eine durchgehende Auflageebene für das Gurtförderband bereitgestellt wird. Grundsätzlich ist es jedoch auch möglich, dass die beiden Teile der jeweiligen Plattform bei maximaler Länge nicht ineinander greifen, sondern ein Abstand oder eine Lücke zwischen den beiden Teilen ausgebildet ist.

Bevorzugt sind die Längen der Plattformen stufenlos verstellbar. Grundsätzlich sind jedoch auch diskrete Verstellpositionen möglich.

Nach einer Ausbildung der Erfindung ist für die Plattformen ein gemeinsames Gurtförderband vorgesehen, auf dem wiederum dann die Waren oder Produkte liegen können. Dies bringt Vorteile bei der Gestaltung der Übergänge zwischen den Plattformen. Bevorzugt wird das Gurtförderband von einer unterhalb der Plattformen angeordneten Antriebswelle gezogen, welche Konstruktion auch als Rüberziehprinzip bezeichnet wird. Die Antriebswelle kann von einem Motor angetrieben werden, beispielsweise einem Trommelmotor, der an einem Gestell befestigt sein kann und somit nicht mitgewogen wird.

Es kann ein Sensor vorgesehen sein, der dazu ausgelegt ist, die Länge von zu wiegenden Stückgütern zu erfassen. Das Erfassungssignal des Sensors kann dann dazu verwendet werden, die Längenverstellung der Plattformen automatisch entsprechend der Länge oder Größe der zu wiegenden Waren oder Produkte vorzunehmen. Bei dem Sensor kann es sich beispielsweise um eine Kamera oder eine Lichtschranke handeln. Alternativ kann die Längenverstellung aber auch manuell vorgenommen werden.

Vorzugsweise ist die Wägevorrichtung als eine Moduleinheit ausgebildet ist, die neben anderen identischen Wägevorrichtungen als eine Spur in eine modular aufgebaute Mehrspurwaage einsetzbar ist. Beispielsweise kann die Wägevorrichtung eine Aufnahme aufweisen, über die die Wägevorrichtung auf einem Querträger der Mehrspurwaage abstützbar ist. Bevorzugt weist die Wägevorrichtung eine insbesondere manuell betätigbare Einrichtung auf, durch die die Wägevorrichtung auf den Querträger klemmbar ist bzw. an dem Querträger fixiert werden kann.

Die Erfindung betrifft weiterhin eine Mehrspurwaage mit mehreren, nebeneinander angeordneten Wägevorrichtungen, die jeweils nach einem der vorhergehenden Ansprüche ausgebildet sind.

Weitere vorteilhafte Ausgestaltungen der Erfindung sind in den Unteransprüchen, der Figurenbeschreibung und der Zeichnung beschrieben.

Die Erfindung wird im Folgenden beispielhaft unter Bezugnahme auf die Zeichnung beschrieben. Es zeigen,
- Fig. 1: eine Seitenansicht einer Ausführungsform der erfindungsgemäßen Wägevorrichtung mit einer Wägeplattform und einer Abführplattform,
- Fig. 2: eine perspektivische Ansicht der Plattformen aus Fig. 1 in einer ersten Stellung,
- Fig. 3: eine Seitenansicht der Plattformen aus Fig. 1 in einer zweiten Stellung,
- Fig. 4: eine schematische Darstellung einer Wägevorrichtung, die nicht Gegenstand der Erfindung ist, und
- Fig. 5: eine perspektivische Ansicht einer Mehrspurwaage.

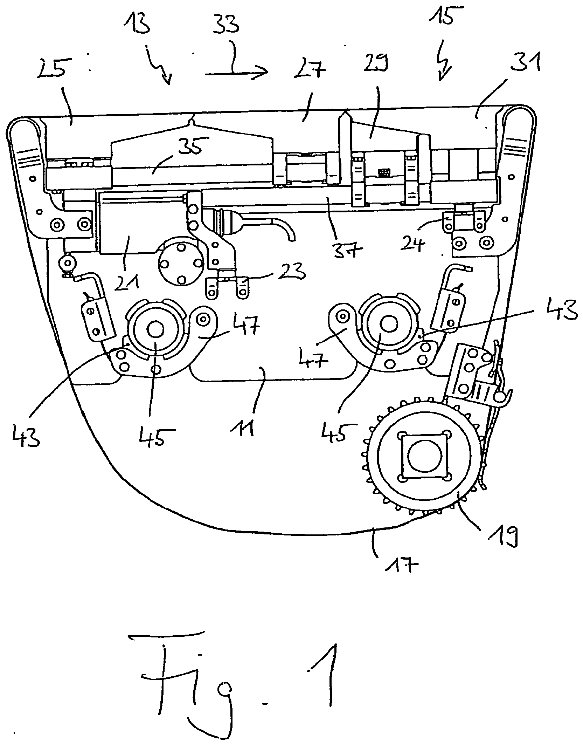

Die als dynamische Kontrollwaage ausgebildete erfindungsgemäße Wägevorrichtung nach der Ausführungsform gemäß den Fig. 1 bis 3 umfasst einen Rahmen 11, auf den eine Wägeplattform 13 und eine Abführplattform 15 aufgesetzt sind. Die beiden Plattformen 13, 15 schließen unmittelbar aneinander an und überlappen nicht. Darüber hinaus wird durch die beiden Plattformen 13, 15 eine ungewinkelte, durchgehende Auflageebene definiert, über die ein für beide Plattformen 13, 15 gemeinsames, geschlossenes Gurtförderband 17 geführt ist. Das Gurtförderband 17 wird durch eine Antriebswelle 19 angetrieben, welche wiederum von einem nicht dargestellten Motor angetrieben wird. Die Antriebswelle 19 ist dabei unterhalb der Abführplattform 15 und unterhalb des Rahmens 11 angeordnet. Grundsätzlich ist es auch möglich, dass das Gurtförderband 17 zusätzlich über eine Zuführplattform geführt ist, die dann insbesondere nicht längenverstellbar ist. Grundsätzlich kann die Wägevorrichtung auch als Preisauszeichner ausgebildet sein, insbesondere zum dynamischen Wiegen ungleichgewichtiger Waren.

Die Wägeplattform 13 ist mit einer Gewichtsbestimmungseinrichtung, insbesondere einer Wägezelle 21, gekoppelt, die dazu ausgelegt ist, das Gewicht einer sich über die Wägeplattform 13 dynamisch hinwegbewegende Ware zu bestimmen. Die Wägezelle 21 ist über einen Rahmenanschluss 23 an dem Rahmen 11 abgestützt. Die Abführplattform 15 ist über einen weiteren Rahmenanschluss 24 direkt an dem Rahmen 11 abgestützt.

Die beiden Plattformen 13, 15 sind jeweils zweiteilig ausgebildet, d.h. die Wägeplattform 13 umfasst ein einlaufseitiges Teil 25 und ein auslaufseitiges Teil 27, und die Abführplattform 15 umfasst ein einlaufseitiges Teil 29 und ein auslaufseitiges Teil 31. Die jeweiligen beiden Teile 25, 27 bzw. 29, 31 sind in Förderrichtung 33 hintereinander angeordnet, d.h. die beiden Teile 25 und 31 stellen bezüglich der Einheit aus beiden Plattformen 13, 15 äußere Teile dar, und die beiden Teile 27, 29 innere Teile.

Die jeweiligen beiden Teile 25, 27 bzw. 29, 31 umfassen jeweils einen Sockelabschnitt 39 und einen integral ausgebildeten Auslegerarm 41, wobei die Auslegerarme 41 der jeweiligen beiden Teile 25, 27 bzw. 29, 31 einander zugewandt sind. Die Teile 25, 27, 29, 31 besitzen jeweils eine kammartige Struktur, wobei die Zinken der beiden Teile 25, 27 bzw. 29, 31 einer jeweiligen Plattform 13, 15 komplementär zueinander ausgebildet sind, so dass die beiden jeweiligen Teile 25, 27 bzw. 29, 31 kämmend ineinander greifen können.

Die beiden Teile 25, 27 der Wägeplattform 13 und die beiden Teile 29, 31 der Abführplattform 15 sind jeweils relativ zueinander bewegbar. Hierzu sind die beiden äußeren Teile 25, 31 in Förderrichtung 33 unverschiebbar gehaltert. Die beiden inneren Teile 27, 29 hingegen sind in Förderrichtung 33 stufenlos verschiebbar gelagert. Um die verschiebbare Lagerung zu realisieren, sind die beiden inneren Teile 27, 29 jeweils auf zwei Rundstäben 35 bzw. 37 gleitgelagert.

Wird das innere Teil 27 längs der Förderrichtung 33 verschoben, verändert sich die in Förderrichtung 33 erstreckende Länge der Wägeplattform 13. Bei Verschieben des inneren Teils 27 in Förderrichtung 33 wird die Wägeplattform 13 auseinandergezogen, bei Verschieben entgegen der Förderrichtung 33 zusammengeschoben. Entsprechend ist durch Verschiebung des inneren Teils 29 die Abführplattform 15 längenverstellbar. Die Längenverstellbarkeit der beiden Plattformen 13, 15 ist dabei derart ausgebildet, dass beide Plattformen 13, 15 immer gleichzeitig längenverstellt werden, und zwar um denselben Betrag und in dieselbe Richtung. Damit wird die Länge der einen Plattform 13, 15 verkürzt, während sich die Länge der anderen Plattform 15, 13 um denselben Betrag erhöht. Die Gesamtlänge der beiden Plattformen 13, 15 von der äußeren Plattform 25 bis zu der äußeren Plattform 31 in Förderrichtung 33 bleibt dabei gleich.

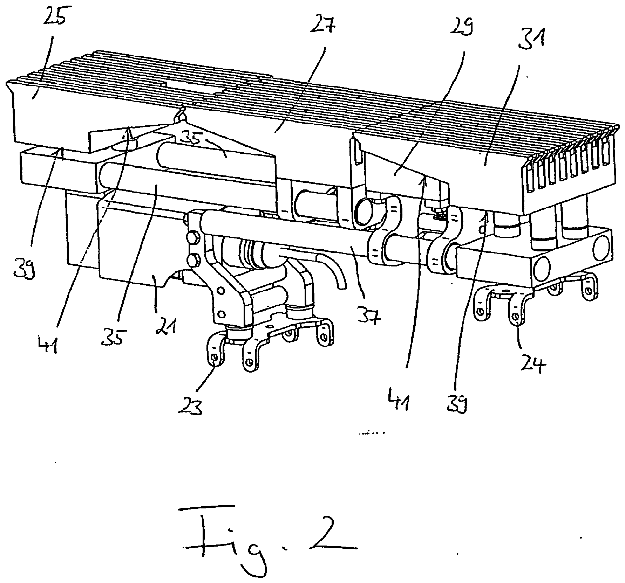

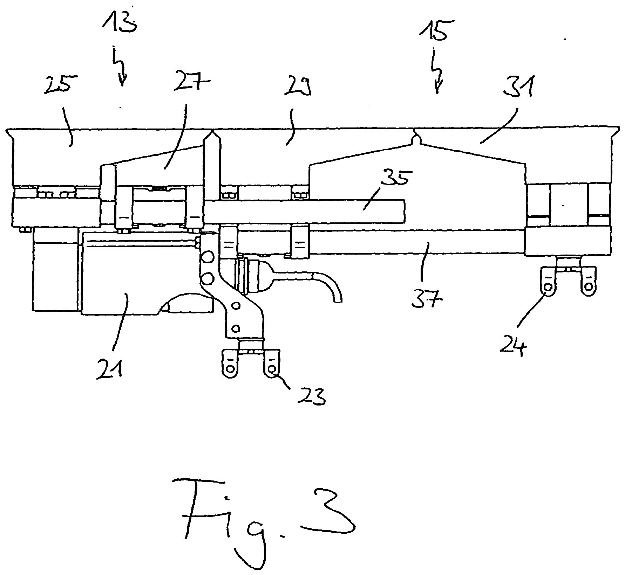

In den Fig. 1 und 2 nimmt die Wägeplattform 13 eine maximale Länge ein, d.h. die beiden Teile 25, 27 sind maximal auseinandergezogen. Die Abführplattform 15 hingegen nimmt in den Fig. 1 und 2 eine minimale Länge ein, d.h. die beiden Teile 29, 31 sind maximal ineinandergeschoben. Die maximale Länge der Plattformen 13, 15 entspricht zumindest im Wesentlichen der Summe der Längen der beiden jeweiligen Teile 25, 27 bzw. 29, 31. Die minimale Länge der Plattformen 13, 15 entspricht zumindest im Wesentlichen der Länge eines Teils 25, 27, 29, 31. In Fig. 3 sind die Längenverhältnisse zwischen den Plattformen 13, 15 umgekehrt, d.h. die Wägeplattform 13 befindet sich in einem Zustand minimaler Länge und die Abführplattform 15 nimmt ihre maximale Länge an.

Die Teile 25, 27, 29, 31 besitzen alle dieselbe Länge. Die minimalen und maximalen Längen der beiden Plattformen 13, 15 sind identisch. Grundsätzlich können die Teile 25, 27, 29, 31 und/oder die Plattformen 13, 15 aber auch voneinander verschiedene Längen aufweisen. Zwischen dem auslaufenden Teil 27 der Wägeplattform 13 und dem einlaufenden Teil 29 der Abführplattform 15, welche beiden Teile 27, 29 gemeinsam bewegt werden, kann ggf. auch ein Abstand vorhanden sein.

Die in den Fig. 1 bis 3 beschriebene Kontrollwaage bietet die Möglichkeit, die Länge der Wägeplattform 13 an die sich in Förderrichtung 33 erstreckende Länge der zu wiegenden Waren oder Produkte anzupassen. Bei Waren mit kleinen Längen kann die Wägeplattform 13 auf eine kleine Länge eingestellt werden, bei Waren mit größeren Längen auf eine entsprechend größere Länge. Dies ist deshalb von Vorteil, da hierdurch möglich ist, Waren mit kleineren Längen mit einem höheren Durchsatz zu wiegen, als dies bei Waagen ohne Längenverstellbarkeit der Fall ist, da die Waren mit kleineren Längen der Wägeplattform in kürzeren Abständen zugeführt werden können. Bei Waagen ohne Längenverstellbarkeit der Wägeplattform würden sich bei den genannten kürzeren Abständen dann nämlich mehrere Waren gleichzeitig auf der Wägeplattform befinden.

Da zusätzlich eine Längenänderung der Wägeplattform 13 durch eine entgegengesetzte Längenänderung der Abführplattform 15 ausgeglichen wird, ist die Gesamtlänge der Kontrollwaage unabhängig von den Verstellpositionen der Plattformen 13, 15, d.h. es ist keine Anpassung des Gurtförderbands 17 erforderlich. Darüber hinaus sind die Positionen der beiden äußeren Teile 25, 31 fest, d.h. die Positionen von einlaufseitig oder auslaufseitig an die Kontrollwaage anschließenden Förderbänder oder Maschinen müssen nicht verstellt werden.

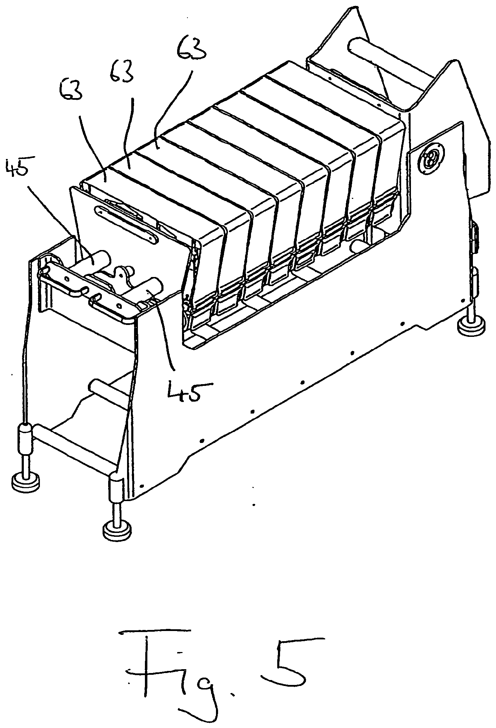

Die in den Fig. 1 bis 3 beschriebene Kontrollwaage ist als eine Moduleinheit 63 ausgebildet, die neben anderen identischen Kontrollwaagen 63 in eine modular aufgebaute Mehrspurwaage einsetzbar ist, wie sie in Fig. 5 gezeigt ist. Hierzu ist der Rahmen 11 der Kontrollwaage mit zwei querverlaufenden Ausnehmungen 43 versehen, über die die Kontrollwaage auf zwei Querträger 45 der Mehrspurwaage aufgesetzt werden kann. Darüber hinaus sind zwei Klemmeinrichtungen 47 vorgesehen, um die Kontrollwaage sicher auf den Querträgern 45 zu haltern.

Die genannte Mehrspurwaage ist in einer von der Anmelderin beim Deutschen Patent- und Markenamt eingereichten Anmeldung mit dem Titel "Mehspurwaage" und dem amtlichen Aktenzeichen 10 2009 060 234.8 näher beschrieben. Diese Anmeldung wird bezüglich der Ausbildung der Mehrspurwaage durch Bezugnahme in die Offenbarung der vorliegenden Anmeldung aufgenommen.

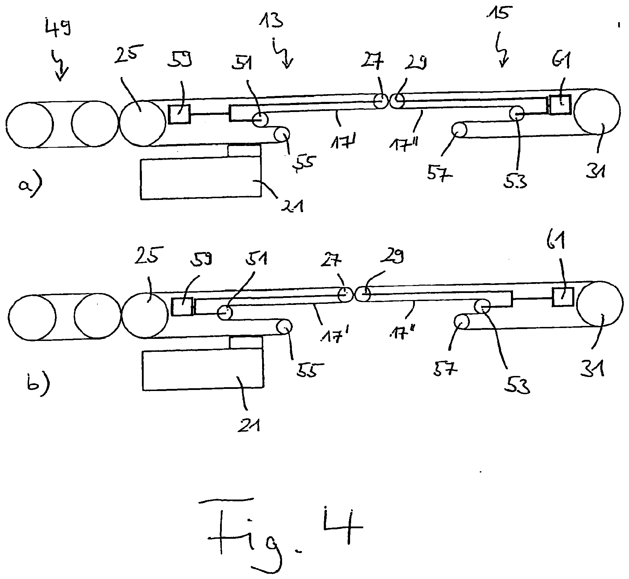

Fig. 4 zeigt eine Kontrollwaage, die nicht Gegenstand der Erfindung ist und die ebenfalls eine längenverstellbare Wägeplattform 13, die auf eine Wägezelle 21 wirkt, und eine längenverstellbare Abführplattform 15 umfasst. Darüber hinaus ist zusätzlich eine in seiner Länge nicht verstellbare Zuführplattform 49 dargestellt. Die Längen der Wägeplattform 13 und der Abführplattform 15 sind wie bei Kontrollwaage gemäß den Fig 1 bis 3 verstellbar. Gegenüber Fig. 4a) besitzt in Fig. 4b) die Wägeplattform 13 eine geringe Länge. Bei der Abführplattform 15 ist es umgekehrt.

Im Gegensatz zu der Kontrollwaage gemäß den Fig. 1 bis 3 ist bei der Kontrollwaage gemäß Fig. 4 jedoch kein gemeinsames Gurtförderband 17 vorgesehen, sondern für die Wägeplattform 13 und die Abführplattform 15 ist jeweils ein eigenes Gurtförderband 17', 17" vorgesehen, so dass bei einer Längenverstellung eine Anpassung der beiden Gurtförderbänder 17', 17" erforderlich ist. Wie aus Fig. 4 erkennbar ist, ist dann für jedes der beiden Gurtförderbänder 17', 17" dann auch eine eigene Antriebswelle 19', 19" vorgesehen.

Im Einzelnen umfasst die Wägeplattform 13 ein einlaufseitiges, äußeres Teil, das als fest positionierte Umlenkrolle 25 ausgebildet ist, und ein auslaufseitiges, inneres Teil, das als bewegliche Umlenkrolle 27 ausgebildet ist. Die Abführplattform 15 umfasst ein einlaufseitiges, inneres Teil, das als bewegliche Umlenkrolle 29 ausgebildet ist, und ein auslaufseitiges, äußeres Teil, das als fest positionierte Umlenkrolle 31 ausgebildet ist. Darüber hinaus umfassen die Wägeplattform 13 und die Abführplattform 15 jeweils eine weitere bewegliche Umlenkrolle 51 bzw. 53 und eine weitere fest positionierte Umlenkrolle 55 bzw. 57, um das Untertrum des jeweiligen Gurtförderbands 17', 17" in einer Schleife zu führen. Die beiden beweglichen Umlenkrolle 27, 51 bzw. 29, 53 einer jeden der beiden Plattformen 13, 15 sind aneinander gekoppelt und werden gemeinsam bewegt. Durch die vorgegebene Anordnung der Umlenkrollen 25, 27, 51, 55 bzw. 29, 31, 53, 57 wird eine Längenänderung des jeweiligen Obertrums durch eine entsprechende Längenänderung der im Untertrum vorgesehenen Schleife ausgeglichen. Die Verstellung der beiden beweglichen Umlenkrolle 27, 51 bzw. 29, 53 und damit die Längenverstellung der Plattformen 13, 15 wird durch eine jeweilige Betätigungseinrichtung 59 bzw. 61 bewirkt.

### Bezugszeichenliste

- 11: Rahmen
- 13: Wägeplattform
- 15: Abführplattform
- 17: Gurtförderband
- 19: Antriebswelle
- 21: Wägezelle
- 23: Rahmenanschluss
- 24: Rahmenanschluss
- 25: einlaufseitiges, äußeres Teil
- 27: auslaufseitiges, inneres Teil
- 29: einlaufseitiges, inneres Teil
- 31: einlaufseitiges, äußeres Teil
- 33: Förderrichtung
- 35: Rundstab
- 37: Rundstab
- 39: Sockelabschnitt
- 41: Auslegerarm
- 43: Ausnehmung
- 45: Querträger
- 47: Klemmeinrichtung
- 49: Zuführplattform
- 51: Umlenkrolle
- 53: Umlenkrolle
- 55: Umlenkrolle
- 57: Umlenkrolle
- 59: Betätigungseinrichtung
- 61: Betätigungseinrichtung
- 63: Moduleinheit

## Patentansprüche

1. Wägevorrichtung mit Gurtförderung, insbesondere Kontrollwaage, umfassend eine Wägeplattform (13) und eine an die Wägeplattform (13) anschließende weitere Plattform (15), insbesondere Zuführ- oder Abführplattform, wobei die Plattformen (13, 15) jeweils eine sich in Förderrichtung (33) erstreckende Länge aufweisen,
**dadurch gekennzeichnet,**
**dass** zumindest die Wägeplattform (13) längenverstellbar, nämlich auseinanderziehbar und zusammenschiebbar, ausgebildet ist, und
**dass** für die Plattformen (13, 15) ein gemeinsames Gurtförderband (17) vorgesehen ist, das von einer unterhalb der Plattformen (13, 15) angeordneten Antriebswelle (19) gezogen wird.

2. Wägevorrichtung nach Anspruch 1,
**dadurch gekennzeichnet,**
**dass** auch die weitere Plattform (15) längenverstellbar, nämlich auseinanderziehbar und/oder zusammenschiebbar, ausgebildet ist.

3. Wägevorrichtung nach Anspruch 2,
**dadurch gekennzeichnet,**
**dass** die Längenverstellungen der Plattformen (13, 15) aneinander gekoppelt sind.

4. Wägevorrichtung nach Anspruch 2 oder 3,
**dadurch gekennzeichnet,**
**dass** die Plattformen (13, 15) zusammen eine Gesamtlänge aufweisen, die konstant bleibt, wenn die Plattformen (13, 15) längenverstellt werden.

5. Wägevorrichtung nach einem der vorstehenden Ansprüche,
**dadurch gekennzeichnet,**
**dass** die Plattformen (13, 15) jeweils mehrteilig, insbesondere zweiteilig ausgebildet sind, wobei die Teile (25, 27; 29, 31) der jeweiligen Plattform (13, 15) in Förderrichtung (33) relativ zueinander bewegbar sind.

6. Wägevorrichtung nach Anspruch 5,
**dadurch gekennzeichnet,**
**dass** die in Förderrichtung (33) insgesamt äußeren Teile (25, 31) fest an der Wägevorrichtung gehaltert und/oder die mittleren Teile (27, 29) bewegbar in der Wägevorrichtung gelagert sind.

7. Wägevorrichtung nach Anspruch 6,
**dadurch gekennzeichnet,**
**dass** die bewegbare Lagerung der mittleren Teile (27, 29) als Gleitlagerung realisiert ist.

8. Wägevorrichtung nach einem der Ansprüche 5 bis 7,
**dadurch gekennzeichnet,**
**dass** die Teile (25, 27; 29, 31) der jeweiligen Plattform (13, 15) dazu ausgebildet sind, kämmend ineinander zu greifen.

9. Wägevorrichtung nach Anspruch 8,
**dadurch gekennzeichnet,**
**dass** die Teile (25, 27; 29, 31) der jeweiligen Plattform (13, 15) in sämtlichen Verstellpositionen der Plattformen (13, 15) kämmend ineinander greifen.

10. Wägevorrichtung nach einem der vorstehenden Ansprüche,
**dadurch gekennzeichnet,**
**dass** die Längen der Plattformen (13, 15) stufenlos verstellbar sind.

11. Wägevorrichtung nach einem der vorstehenden Ansprüche,
**dadurch gekennzeichnet,**
**dass** ein Sensor vorgesehen ist, der dazu ausgelegt ist, die Länge von zu wiegenden Stückgütern zu erfassen.

12. Wägevorrichtung nach einem der vorstehenden Ansprüche,
**dadurch gekennzeichnet,**
**dass** die Wägevorrichtung als eine Moduleinheit ausgebildet ist, die neben anderen identischen Wägevorrichtungen als eine Spur in eine modular aufgebaute Mehrspurwaage einsetzbar ist.

13. Mehrspurwaage mit mehreren, nebeneinander angeordneten Wägevorrichtungen, die jeweils nach einem der vorhergehenden Ansprüche ausgebildet sind.

## Claims

1. A weighing apparatus with belt conveying, in particular a checkweigher, comprising a weighing platform (13) and a further platform (15), in particular a supply platform or removal platform, adjoining the weighing platform (13), wherein the platforms (13, 15) each have a length extending in the conveying direction (33),
**characterized in that**
at least the weighing platform (13) is designed as longitudinally adjustable, namely extendable and compressible; and
**in that** a common belt conveyor band (17) is provided for the platforms (13, 15) and is pulled by a drive shaft (19) arranged beneath the platforms (13, 15).

2. A weighing apparatus in accordance with claim 1,
**characterized in that**
the further platform (15) is also designed as longitudinally adjustable, namely extendable and/or compressible.

3. A weighing apparatus in accordance with claim 2,
**characterized in that**
the longitudinal adjustments of the platforms (13, 15) are coupled to one another.

4. A weighing apparatus in accordance with claim 2 or claim 3,
**characterized in that**
the platforms (13, 15) have a total length together which remains constant when the platforms (13, 15) are longitudinally adjusted.

5. A weighing apparatus in accordance with any one of the preceding claims,
**characterized in that**
the platforms (13, 15) are each designed in multiple parts, in particular in two parts, with the parts (25, 27; 29, 31) of the respective platform (13, 15) being movable relative to one another in the conveying direction (33).

6. A weighing apparatus in accordance with claim 5,
**characterized in that**
the outer parts (25, 31) overall in the conveying direction (33) are fixedly held at the weighing apparatus and/or the middle parts (27, 29) are movably supported in the weighing apparatus.

7. A weighing apparatus in accordance with claim 6,
**characterized in that**
the movable support of the middle parts (27, 29) is realised as a slide bearing.

8. A weighing apparatus in accordance with any one of the claims 5 to 7,
**characterized in that**
the parts (25, 27; 29, 31) of the respective platform (13, 15) are designed to engage into one another in a meshing manner.

9. A weighing apparatus in accordance with claim 8,
**characterized in that**
the parts (25, 27; 29, 31) of the respective platform (13, 15) engage into one another in a meshing manner in all the adjustment positions of the platforms (13, 15).

10. A weighing apparatus in accordance with any one of the preceding claims,
**characterized in that**
the lengths of the platforms (13, 15) are continuously adjustable.

11. A weighing apparatus in accordance with any one of the preceding claims,
**characterized in that**
a sensor is provided which is configured to detect the length of the piece goods to be weighed.

12. A weighing apparatus in accordance with any one of the preceding claims,
**characterized in that**
the weighing apparatus is designed as a modular unit which can be used next to other identical weighing apparatuses as a track in a multi-track set of scales of modular construction.

13. A multi-track set of scales having a plurality of weighing apparatuses arranged next to one another which are each designed in accordance with any one of the preceding claims.

## Revendications

1. Dispositif de pesage avec convoyeur à bande, en particulier balance de contrôle, comprenant une plate-forme de pesage (13) et une autre plate-forme (15) à la suite de la plate-forme de pesage (13), en particulier plate-forme d'amenée ou plate-forme d'enlèvement, dans lequel les plates-formes (13, 15) ont une longueur qui s'étend respectivement dans la direction de convoyage (33),
**caractérisé en ce que** au moins la plate-forme de pesage (13) est réalisée réglable en longueur, à savoir par déploiement et par rétraction, et
**en ce qu'**il est prévu pour les plates-formes (13, 15) une bande de convoyeur commune (17) qui est tirée par un arbre d'entraînement (19) agencé au-dessous des plates-formes (13, 15).

2. Dispositif de pesage selon la revendication 1,
**caractérisé en ce que** l'autre plates-forme (15) également est réalisée réglables en longueur, à savoir par déploiement et/ou par rétraction.

3. Dispositif de pesage selon la revendication 2,
**caractérisé en ce que** les réglages en longueur des plates-formes (13, 15) sont couplés les uns aux autres.

4. Dispositif de pesage selon la revendication 2 ou 3,
**caractérisé en ce que** les plates-formes (13, 15) présentent ensemble une longueur totale qui reste constante quand les plates-formes (13, 15) sont réglées en longueur.

5. Dispositif de pesage selon l'une des revendications précédentes,
**caractérisé en ce que** les plates-formes (13, 15) sont réalisées respectivement en plusieurs parties, en particulier en deux parties, de sorte que les parties (25, 27 ; 29, 31) de la plate-forme respective (13, 15) sont déplaçables l'une par rapport à l'autre en direction de convoyage (33).

6. Dispositif de pesage selon la revendication 5,
**caractérisé en ce que** les parties (25, 31) situées dans l'ensemble à l'extérieur en direction de convoyage (33) sont retenues de manière fixe sur le dispositif de pesage, et/ou les parties médianes (27, 29) sont montées mobiles dans le dispositif de pesage.

7. Dispositif de pesage selon la revendication 6,
**caractérisé en ce que** le montage mobile des parties médianes (27, 29) est réalisé sous forme de montage à coulissement.

8. Dispositif de pesage selon l'une des revendications 5 à 7,
**caractérisé en ce que** les parties (25, 27 ; 29, 31) de la plate-forme respective (13, 15) sont réalisées pour s'engager les unes dans les autres à la manière d'un peigne.

9. Dispositif de pesage selon la revendication 8,
**caractérisé en ce que** les parties (25, 27 ; 29, 31) de la plate-forme respective (13, 15) s'engagent les unes dans les autres à la manière d'un peigne dans la totalité des positions de réglage des plates-formes (13, 15).

10. Dispositif de pesage selon l'une des revendications précédentes,
**caractérisé en ce que** les longueurs des plates-formes (13, 15) sont réglables en continu.

11. Dispositif de pesage selon l'une des revendications précédentes,
**caractérisé en ce qu'**il est prévu un capteur qui est conçu pour détecter la longueur des articles à peser.

12. Dispositif de pesage selon l'une des revendications précédentes,
**caractérisé en ce que** le dispositif de pesage est réalisé sous forme d'unité modulaire qui peut être employée à côté d'autres dispositifs de pesage identiques sous forme d'une piste dans une balance multipiste réalisée de façon modulaire.

13. Balance multipiste comprenant plusieurs dispositifs de pesage agencés les uns à côté des autres, qui sont réalisés respectivement selon l'une des revendications précédentes.
